# EUROPÄISCHE PATENTSCHRIFT

(11) **EP 0 754 713 B1**
(45) Veröffentlichungstag und Bekanntmachung des Hinweises auf die Patenterteilung: **28.02.2001**
(21) Anmeldenummer: 96110996.4
(22) Anmeldetag: 09.07.1996
(51) Int. Cl.: C08G 18/70, C08G 18/62, C09J 175/00, C09D 175/00, C07C 265/14

(54) **Wasseremulgierbare Polyisocyanate**
Water-emulsifiable polyisocyanates
Polyisocyanates émulsifiables dans l'eau

(30) Priorität: 18.07.1995 DE 19526079
(43) Veröffentlichungstag der Anmeldung: 22.01.1997
(73) Patentinhaber: BASF Aktiengesellschaft, 67063 Ludwigshafen (DE)
(72) Erfinder: Huckestein, Brigitta, Dr., 67105 Schifferstadt (DE); Renz, Hans, Dr., 67149 Meckenheim (DE); Kothrade, Stephan, Dr., 67117 Limburgerhof (DE); Häberle, Karl, Dr., 67346 Speyer (DE)

(56) Entgegenhaltungen:
- EP-A- 0 007 532
- EP-A- 0 276 465
- EP-A- 0 310 345

## Beschreibung

Die Erfindung betrifft wasseremulgierbare Polyisocyanate, enthaltend
a) aliphatische, cycloaliphatische und aromatische Polyisocyanate und
b) Umsetzungsprodukte der vorstehend aufgeführten Polyisocyanate mit Polyvinylpyrrolidonen, welche mindestens eine mit Isocyanat reaktive Gruppe aufweisen.

Im weiteren betrifft die Erfindung die Verwendung der wasseremulgierbaren Polyisocyanaten als Zusatzmittel für wäßrige Dispersionen, insbesondere für Klebstoffe, Beschichtungsmittel oder Imprägnierungsmittel, siche z.B. EP-A-0 310 345.

Gebrauchseigenschaften von wäßrigen Polymerdispersionen können durch den Zusatz von Polyisocyanaten verbessert werden.

Zu diesem Zweck haben sich hydrophil modifizierte Polyisocyanate, welche wasseremulgierbar sind, als geeignet erwiesen.

Verwendet werden z.B. Polyisocyanate, die durch chemisch gebundene Carboxylgruppen hydrophil modifiziert sind, wie sie z.B. in der DE-A-41 42 275 beschrieben sind. Hierbei ist jedoch nachteilig, daß die carboxylhaltigen Polyisocyanate mit kationischen Bindemitteln mit pH-Werten kleiner als ca. 5 nicht verträglich sind.

Aus der EP-A-7532 ist die Verwendung von Polyvinylpyrrolidonen als Emulgierhilfsmittel für Polyisocyanate bekannt. Zur Emulgierung der Polyisocyanate muß intensiv gerührt werden

Weiterhin weisen die carboxylhaltigen Polyisocyanate nur dann eine ausreichende Lagerstabilität auf, wenn sie im nichtneutralisierten Zustand aufbewahrt werden, weil die mit tertiären Aminen neutralisierten Carbonsäuren wirksame Katalysatoren für die Trimerisierung von NCO-Gruppen darstellen. Der Anwender ist daher gezwungen, die Neutralisation unmittelbar vor der Emulgierung durchzuführen, was einen weiteren Verfahrensschritt darstellt.

Mit Polyethylenoxid-haltigen Alkoholen hydrophil modifizierte Polyisocyanate sind z.B. aus EP-A-206059 bekannt.

Ein grundsätzlicher Nachteil dieser Polyisocyanate besteht darin, daß die Beschichtungen verhältnismäßig langsam aushärten. Eine raschere Aushärtung ist jedoch sehr wünschenswert, weil dadurch die Taktzeit der Beschichtungsanlagen erhöht werden kann. Außerdem sind die anwendungstechnischen Eigenschaften der erhaltenen Beschichtungen noch verbesserungswürdig, insbesondere hinsichtlich der Haftung auf Metall.

Aufgabe der Erfindung war daher, ein wasseremulgierbares Polyisocyanat zur Verfügung zu stellen, das eine erhöhte Geschwindigkeit des Härteanstiegs gewährleistet. Die anwendungstechnischen Eigenschaften der wäßrigen Dispersionen, welche die wasseremulgierbaren Polyisocyanate enthalten, und der damit hergestellten Beschichtungen , Imprägnierungen oder Verklebungen sollen im Vergleich zu den bekannten wasseremulgierbaren Polyisocyanaten möglichst vergleichbar oder besser sein, insbesondere ist die Haftung auf Metall zu verbessern.

In den wasseremulgierbaren Polyisocyanaten können die unter b) verwendeten Polyisocyanate a) mit denen unter a) gleich oder verschieden sein.

Als Polyisocyanat genannt seien z.B. übliche Diisocyanate und/ oder übliche höher funktionelle Polyisocyanate mit einer mittleren NCO-Funktionalität von 2,0 bis 4,5. Diese Komponenten können alleine oder im Gemisch vorliegen.

Beispiele für übliche Diisocyanate sind aliphatische Diisocyanate wie Tetramethylendiisocyanat, Hexamethylendiisocyanat (1.6-Diisocyanatohexan), Octamethylendiisocyanat, Decamethylendiisocyanat, Dodecamethylendiisocyanat, Tetradecamethylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)-cyclohexan(Isophorondiisocyanat) oder 2,4, oder 2,6-Diisocyanto-l-methylcyclohexan sowie aromatische Diisocyanate wie 2,4 oder 2,6-Toluylendiisocyanat, Tetramethylxylylendiisocyanat, Xylylendiisocyanat, 2,4'- oder 4,4'-Diisocyanatodiphenylmethan, 1.3- oder 1,4-Phenylendiisocyanat, 1-chlor-2,4-phenylendiisocyanat, l,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat oder Diphenylether-4,4'-diisocyanat. Es können auch Gemische der genannten Diisocyanate vorliegen. Bevorzugt sind Hexamethylendiisocyanat und Isophorondiisocyanat.

Als übliche höher funktionelle Polyisocyanate eignen sich beispielsweise Triisocyanate wie 2,4,6-Triisocyanatotoluol oder 2,4,4'-Triisocyanatodiphenylether oder die Gemische aus Di-, Tri-und höheren Polyisocyanaten, die durch Phosgenierung von entsprechenden Anilin/Formaldehyd-Kondensaten erhalten werden und Methylenbrücken aufweisende Polyphenylpolyisocyanate darstellen.

Von besonderem Interesse sind übliche aliphatische höher funktionelle Polyisocyanate der folgenden Gruppen:
(a) Isocyanuratgruppen aufweisende Polyisocyanate von aliphatischen und/oder cycloaliphatischen Diisocyanaten. Besonders bevorzugt sind hierbei die entsprechenden Isocyanat-Isocyanurate auf Basis von Hexamethylendiisocyanat und Isophorondiisocyanat. Bei den vorliegenden Isocyanuraten handelt es sich insbesondere um einfache Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-%, und eine mittlere NCO-Funktionalität von 2,6 bis 4,5.
(b) Uretdiondiisocyanate mit aliphatisch und/oder cycloaliphatisch gebundenen Isocyanatgruppen, vorzugsweise von Hexamethylendiisocyanat oder Isophorondiisocyanat abgeleitet. Bei Uretdiondiisocyanaten handelt es sich um cyclische Dimerisierungsprodukte von Diisocyanaten.
(c) Biuretgruppen aufweisende Polyisocyanate mit aliphatisch gebundenen Isocyanatgruppen, insbesondere Tris(6-isocyantohexyl)biuret oder dessen Gemische mit seinen höheren Homologen, sowie von Isophorondiisocyanat abgeleitete Biurete. Diese Biuretgruppen aufweisenden Polyisocyanate weisen im allgemeinen einen NCO-Gehalt von 10 bis 30 Gew.-%, insbesondere von 18 bis 25 Gew.-% und eine mittlere NCO-Funktionalität von 3 bis 4,5 auf.
(d) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen wie Trimethylolpropan, Glycerin, 1,2-Dihydroxypropan oder deren Gemischen erhalten werden können. Diese Urethan- und/oder Allophanatgruppen aufweisenden Polyisocyanate haben im allgemeinen eine NCO-Gehalt von 12 bis 20 Gew.-% und eine mittlere NCO-Funktionalität von 2,0 bis 3.
(e) Oxadiazintriongruppen enthaltende Polyisocyanate, vorzugsweise von Hexamethylendiisocyanat oder Isophorondiisocyanat abgeleitet. Soche Oxadiazintriongruppen enthaltenden Polyisocyanate sind aus Diisocyanat und Kohlendioxid herstellbar.
(f) Uretonimin-modifizierte Polyisocyanate.

Aliphatische und cycloaliphatische Polyisocyanate sind besonders bevorzugt. Ganz besonders bevorzugt sind Hexamethylendiisocyanat und Isophorondiisocyanat und insbesondere deren Isocyanurate und Biurete.

Zur Herstellung der Umsetzungsprodukte b) werden die oben bezeichneten Polyisocyanate mit Polyvinylpyrrolidonen umgesetzt.

Bei den Polyvinylpyrrolidonen handelt es sich insbesonders um solche mit einem zahlenmittleren Molekulargewicht von 400 bis 40000 g/mol, besonders bevorzugt mit einem Molekulargewicht von 500 bis 8000 g/mol.

Das Molekulargewicht wird z.B. bestimmt durch Gelpermeationschromatographie. Insbesondere kann das Molekulargewicht auch durch Endgruppenbestimmung bestimmt werden, wenn die Anzahl der funktionellen Gruppen per Polymermolekül bekannt ist, wie es z.B. bei der unten beschriebenen Herstellung der Fall ist. Die Polyvinylpyrrolidone können außer Vinylpyrrolidon auch andere ethylenisch ungesättigten Monomere als Aufbaukomponenten enthalten. Der Anteil solcher Monomere liegt im allgemeinen jedoch unter 30 Gew.-%, bevorzugt unter 10 Gew.-%, besonders bevorzugt unter 5 Gew.-% und ganz besonders bevorzugt bei 0 Gew.-%.

Die Polyvinylpyrrolidone enthalten mindestens eine mit Isocyanat reaktionsfähige Gruppe, wobei es sich insbesondere um eine primäre oder sekundäre Aminogruppe oder besonders bevorzugt um eine Hydroxylgruppe handelt.

Bevorzugt enthalten die Polyvinylpyrrolidone im Mittel ein bis zwei mit Isocyanat reaktive Gruppen im Molekül (d.h. ihre Funktionalität ist 1 bis 2).

Besonders bevorzugt ist ihre Funktionalität 1 bis 1,2. Ganz besonders bevorzugt enthalten die Polyvinylpyrrolidone im Mittel eine mit Isocyanat reaktionsfähige Gruppe, insbesondere eine Hydroxylgruppe im Molekül (Funtionalität 1).

Die gegenüber Isocyanat reaktiven Gruppen sind vorzugsweise endständig in den Polymerketten der Polyvinylpyrrolidon gebunden.

Die gegenüber Isocyanat reaktive Gruppe kann z.B. durch Verwendung von speziellen Initiatoren bzw. Reglern bei der Polymerisation von N-Vinylpyrrolidon in das Molekül eingeführt werden. In F. Haaf, A. Sammer und F. Straub, Polymer Journal 17, Seiten 143 - 152 (1985) ist z.B. die Polymerisation von N-Vinylpyrrolidon im Wasser mit H₂O₂ als Initiator beschrieben, wobei in jedem gebildeten Polyvinylpyrrolidonmolekül genau eine endständige Hydroxylgruppe vorhanden ist. Das gewünschte Molekulargewicht wird dabei durch die Konzentration an H₂O₂ eingestellt.

Die Herstellung der Umsetzungsprodukte b) kann so erfolgen, daß die NCO-Gruppen des Ausgangs-Polyisocyanats und die NCO-reaktiven Gruppen der Polyvinylpyrrolidone in äquivalenten Mengen umgesetzt werden und das so erhaltene, im wesentlichen NCO-Gruppen-freie Produkt mit dem selben oder auch verschiedenen Polyisocyanaten a) abgemischt wird.

Die Herstellung kann auch so erfolgen, daß die Polyvinylpyrrolidone mit überschüssigem Ausgangs-Polyisocyanat umgesetzt werden und so direkt eine Mischung a) + b) erhalten wird.

Die Polyvinylpyrrolidone werden in solchen Mengen verwendet, daß das wasseremulgierbare Polyisocyanat vorzugsweise einen Gehalt der Polyvinylpyrrolidone von 1 bis 20 Gew.-%, besonders bevorzugt von 5 bis 18 Gew.-%, bezogen auf die Summe aus a) + b), aufweist. Werden andere hyrophile Gruppen mitverwendet, so beträgt ihr Gehalt insbesondere nicht mehr als 15 Gew.-% Ethylenoxid-Einheiten bezogen auf das wasseremulgierbare Polyisocyanat, bzw. nicht mehr als 2 mol chemisch an das Isocyanat gebundene Carboxyl- oder Sulfonatgruppen bezogen auf 1 kg wasseremulgierbares Polyisocyanat. Die Mitverwendung anderer hydrophiler Gruppen ist jedoch nicht erforderlich.

Die Umsetzung der Polyvinylpyrrolidone mit den Polyisocyanaten erfolgt vorzugsweise bei Temperaturen zwischen 20°C und 150°C; gegebenenfalls unter Mitverwendung üblicher Katalysatoren wie z.B. Dibutylzinndilaurat oder Diazabicyclooctan.

Es kann vorteilhaft sein, bei der Synthese gegenüber NCO inerte Lösungsmittel wie Kohlenwasserstoffe, Ketone, Ester, Amide oder geeignete Lactame zu verwenden.

Die wasseremulgierbaren Polyisocyanate eignen sich als Zusatzmittel, d.h. als Vernetzungsmittel, für wäßrige Polymerdispersionen, insbesondere für Dispersionen von Polyurethanen oder radikalisch polymerisierten Polymeren. Sie eignen sich besonders als Zusatzmittel für Klebstoffe, Beschichtungsmittel oder Imprägnierungsmittel auf Basis wäßriger Dispersionen insbesonders von Polyurethanen oder radikalisch polymerisierten Polymeren.

Die wasseremulgierbaren Polyisocyanatesind spontan in Wasser emulgierbar.

Die wäßrigen Dispersionen zeigen eine erhöhte Härtungsgeschwindigkeit im Vergleich zu wäßrigen Dispersionen, welche wasseremulgierbare Polyisocyanate mit Ethylenoxideinheiten enthalten.

Sie können auch alleine, z.B. zur Ausrüstung von Textilien verwendet werden (s. z.B. Deutsche Patentanmeldung P 44 15 451.8).

Die erhaltenen Imprägnierungs-, Beschichtungsmittel und Klebstoffe weisen eine nur unwesentlich erhöhte Hydrophilie auf.

### Beispiele

### Polyisocyanat PI 1:

Durch Trimerisierung eines Teiles der Isocyanatgruppen von 1,6-Diisocyanatohexan hergestelltes Isocyanuratgruppen aufweisendes Polyisocyanat, welches im wesentlichen aus Tris-(6-isocyanatohexyl)-isocyanurat und dessen höheren Homologen besteht, mit einem NCO-Gehalt von 22,2 %, einem Gehalt an monomerem Diisocyanat von weniger als 0,3 %, einer Viskosität bei 23°C von 1,9 Pas und einer mittleren NCO-Funktionalität von ca. 3,3.

### Polyiscocyanat PI 2:

Biuretpolyisocyanat auf Basis von 1,6-Diisocyanatohexan, welches im wesentlichen aus N,N",N"-Tris(6-isocyanatohexyl)biuret und dessen höheren Homologen besteht, mit einem NCO-Gehalt von 21,9 %, einem Gehalt an monomerem Diisocyanat von weniger als 0,3 %, einer Viskosität bei 23°C von 2,1 Pas und einer mittleren NCO-Funktionalität von ca. 3,3.

### Polyvinylpyrrolidon (PVP)

Das verwendete Polyvinylpyrrolidon trug eine endständige OH-Gruppe per Polymerkette (OH-Funktionalität 1) und wies eine OH-Zahl von 60 mg KOH/g auf.

### Wasseremulgierbare Polyisocyanate

### Beispiel 1

Zu 37 Teilen PI 1 (HDI-Isocyanurat) wird eine Lösung von 6 Teilen PVP in 10 Teilen Propylencarbonat (PC) gegeben und 150 min bei 100°C gerührt.

Man erhält ein klares, gelbliches Harz mit einem Gehalt an Polyvinylpyrrolidon von 11.3 Gew.-%, einem Gehalt an PC von 18,9 Gew.-% und einem NCO-Gehalt von 15,0 Gew.-%, das sich leicht in Wasser emulgieren läßt.

### Beispiel 2

Man verfährt analog zu Beispiel 1 unter Verwendung von PI 2. Man erhält ein klares, gelbliches Harz mit einem Gehalt an PVP von 11.3 Gew.%, einem Gehalt an PC von 18.9 Gew.-% und einem NCO-Gehalt von 15.0 Gew.-%, das sich leicht in Wasser emulgieren läßt.

### Vergleichsbeispiel (nach EP 206 059)

37 Teile PI I werden mit 6 Teilen eines auf Methanol gestarteten Polyethylenoxid mit endständiger OH-Gruppe des Molgewichts 1100 g/mol und mit 10 Teilen PC bei 100°C während 150 min gerührt.

Man erhält eine klares, gelbliches Harz mit einem Gehalt des Polyethylenoxids von 11,3 Gew.-%, einem Gehalt an PC von 18,9 Gew.-% und einem NCO-Gehalt von 15,1 Gew.-%, das sich leicht in Wasser emulgieren läßt.

### Anwendungstechnische Prüfungen:

### Grundrezept: (Teile sind Gewichtsteile)

89,6 Teile einer wäßrigen Acrylat-Dispersion mit einem Feststoffgehalt von 45 Gew.-%, einer Mindestfilmbildetemperatur von 55°C und einem Hydroxylgruppengehalt von 2,4 Gew.-% werden mit Triethanolamin auf einen pH-Wert von 6,8 eingestellt. Dazu werden 11 Teile eines Gemisches aus Butylacetat und Butyldiglykolacetat (7/3) sowie 10 Teile Wasser gegeben.

Zum Schluß werden 8 Teile der erfindungsgemäßen Polyisocyanate bzw. des Vergleichsversuches eingerührt.

Die Dispersionen wurden mittels eines Filmziehrahmens auf Stahlblechen zu Filmen gezogen und 30 min bei 60°C getrocknet (Trockendicke ca. 45 um).

Dann wurde der Anstieg der Pendelhärte (nach König, DIN 53157) über die Zeit verfolgt, sowie eine Haftungsprüfung durchgeführt (Gitterschnitt nach DIN 53151).

| Zeit (Tage) | Beispiel | 0 | 1 | 4 | 5 | 6 | 7 |
|---|---|---|---|---|---|---|---|
| Pendelhärte | 1 | 79 | 84 | 105 | 109 | 108 | 109 |
| (Schwingungen) | 2 | 77 | 81 | 103 | 105 | 105 | 105 |
| | Vergleich | 50 | 58 | 72 | 76 | 82 | 88 |

Bei der Gitterschnittprüfung werden Noten von 0 (sehr gute Haftung) bis 6 (sehr schlechte Haftung) vergeben:

| Beispiel | Note |
|---|---|
| 1 | 0 |
| 2 | 0 |
| Vergleich | 2 |

## Patentansprüche

1. Wasseremulgierbare Polyisocyanate, enthaltend
a) aliphatische, cycloaliphatische und aromatische Polyisocyanate und
b) Umsetzungsprodukte der vorstehend aufgeführten Polyisocyanate mit Polyvinylpyrrolidonen, welche mindestens eine mit Isocyanat reaktive Gruppe aufweisen.

2. Wasseremulgierbare Polyisocyanate gemäß Anspruch 1, enthaltend die Umsetzungsprodukte b) in einer solchen Menge, daß der Gehalt an Polyvinylpyrrolidon 1 bis 20 Gew.-%, bezogen auf a) + b) beträgt.

3. Wasseremulgierbare Polyisocyanate gemäß Anspruch 1 oder 2, wobei es sich bei dem Polyvinylpyrrolidon um ein Polyvinylpyrrolidon mit einem zahlenmittleren Molekulargewicht von 400 bis 40000 handelt.

4. Wasseremulgierbare Polyisocyanate gemäß einen der Ansprüche 1 bis 3, wobei das Polyvinylpyrrolidon mindestens eine Hydroxylgruppe als mit Isocyanat reaktive Gruppe aufweist.

5. Wäßrige Dispersionen von Polyurethanen oder radikalisch polymerisierten Polymeren, enthaltend die wasseremulgierbaren Polyisocyanate gemäß einem der Ansprüche 1 bis 4.

6. Klebstoffe, Beschichtungsmittel oder Imprägnierungsmittel auf Basis wäßriger Dispersionen, enthaltend die wasseremulgierbaren Polyisocyanate gemäß einem der Ansprüche 1 bis 4.

## Claims

1. A water-emulsifiable polyisocyanate, containing
a) aliphatic, cycloaliphatic and aromatic polyisocyanates and
b) reaction products of the abovementioned polyisocyanates with polyvinylpyrrolidones which have at least one group which is reactive with isocyanate.

2. A water-emulsifiable polyisocyanate as claimed in claim 1, containing the reaction products b) in an amount such that the polyvinylpyrrolidone content is from 1 to 20% by weight, based on a) + b).

3. A water-emulsifiable polyisocyanate as claimed in claim 1 or 2, wherein the polyvinylpyrrolidone is a polyvinylpyrrolidone having a number average molecular weight of from 400 to 40000.

4. A water-emulsifiable polyisocyanate as claimed in any of claims 1 to 3, wherein the polyvinylpyrrolidone has at least one hydroxyl group as the group which is reactive with isocyanate.

5. An aqueous dispersion of a polyurethane or a polymer obtained by free radical polymerization, containing a water-emulsifiable polyisocyanate as claimed in any of claims 1 to 4.

6. An adhesive, coating material or impregnating material based on an aqueous dispersion containing a water-emulsifiable polyisocyanate as claimed in any of claims 1 to 4.

## Revendications

1. Polyisocyanates émulsifiables dans l'eau, contenant
a) des polyisocyanates aliphatiques, cycloaliphatiques et aromatiques et
b) des produits de réaction des polyisocyanates cités ci-dessus avec des polyvinylpyrrolidones, et qui présentent au moins un groupement réactif vis-à-vis des isocyanates.

2. Polyisocyanates émulsifiables dans l'eau selon la revendication 1, contenant les produits de réaction b) en une quantité telle que la teneur en polyvinylpyrrolidone s'élève à 1 à 20% en poids, par rapport à a) + b).

3. Polyisocyanates émulsifiables dans l'eau selon la revendication 1 ou 2, où la polyvinylpyrrolidone est une polyvinylpyrrolidone ayant une masse molaire moyenne en nombre de 400 à 40 000.

4. Polyisocyanates émulsifiables dans l'eau selon l'une quelconque des revendications 1 à 3, où la polyvinylpyrrolidone présente au moins un groupement hydroxyle en tant que groupement réactif vis-à-vis des isocyanates.

5. Dispersions aqueuses de polyuréthanes ou de polymères polymérisés de façon radicalaire, contenant les polyisocyanates émulsifiables dans l'eau selon l'une quelconque des revendications 1 à 4.

6. Adhésifs, agent d'enduction ou d'imprégnation à base de dispersions aqueuses, contenant les polyisocyanates émulsifiables dans l'eau selon l'une quelconque des revendications 1 à 4.
